# EUROPÄISCHE PATENTSCHRIFT

(11) **EP 2 418 129 B1**
(45) Veröffentlichungstag und Bekanntmachung des Hinweises auf die Patenterteilung: **16.01.2013**
(21) Anmeldenummer: 11175054.3
(22) Anmeldetag: 22.07.2011
(51) Int. Cl.: B60R 25/02

(54) **Vorrichtung zur Verlagerung eines bewegbaren Sperrelementes**
Device for displacing a movable locking element
Dispositif de déplacement d'un élément de blocage mobile

(30) Priorität: 10.08.2010 DE 102010039161
(43) Veröffentlichungstag der Anmeldung: 15.02.2012
(73) Patentinhaber: Huf Hülsbeck & Fürst GmbH & Co. KG, 42551 Velbert (DE)
(72) Erfinder: Zillmann, Horst, 81243 München (DE); Indinger, Max, 82131 Gauting (DE)
(74) Vertreter: Vogel, Andreas

(56) Entgegenhaltungen:
- DE-A1- 2 825 873
- DE-A1-102006 057 356
- DE-A1-102007 059 713

## Beschreibung

Die Erfindung betrifft eine Vorrichtung zur Verlagerung eines bewegbaren Sperrelementes eines funktionswesentlichen Bauteils, insbesondere einer Lenksäule eines Kraftfahrzeuges, mit einem Antrieb, der mit dem Sperrelement derart in mechanischer Wirkverbindung steht, dass das Sperrelement zwischen einer Verriegelungsstellung und einer Entriegelungsstellung bewegbar ist, wobei in der Verriegelungsstellung das Sperrelement in das funktionswesentliche Bauteil eingreift und in der Entriegelungsstellung das Sperrelement losgelöst vom funktionswesentlichen Bauteil ist.

In der 102006057356 A ist eine gattungsgemäße Vorrichtung bekannt, die erfolgreich als Sicherungseinrichtung eingesetzt wird, die eine Funktion eines Kraftfahrzeugbauteils, insbesondere einer Lenksäule verhindert oder zumindest stark einschränken kann, falls das Fahrzeug sich im verriegelten Zustand befindet.

Es ist Aufgabe der vorliegenden Erfindung, eine gattungsgemäße Vorrichtung zur Verlagerung eines Sperrelementes zu schaffen, die kompakter gebaut ist und die den hohen Anforderungen einer funktionsgerechten Bewegung des Sperrgliedes zwischen seiner Verriegelungsstellung und der Entriegelungsstellung gerecht wird.

Die Aufgabe der vorliegenden Erfindung wird durch sämtliche Merkmale des Patentanspruches 1 gelöst. In den abhängigen Patentansprüchen sind mögliche Ausführungsformen beschrieben.

Hierzu ist erfindungsgemäß vorgesehen, dass das Sperrelement an einer Achse drehbar gelagert ist, um eine Bewegung zwischen der Verriegelungsstellung und der Entriegelungsstellung auszuführen und eine Sicherheitsführung vorgesehen ist, die bei einer Fehlstellung des Bauteils bewirkt, dass das Sperrelement in eine Zwischenstellung bringbar ist, die zwischen der Verriegelungsstellung und der Entriegelungsstellung liegt, wobei die Sicherheitsführung derart ausgeführt ist, dass während der Bewegung zwischen der Verriegelungsstellung und der Entriegelungsstellung das Sperrelement lediglich um die Achse schwenkt, wobei die Achse ihre Position in der Sicherheitsführung beibehält, und im Falle der Fehlstellung des Bauteils bei der Bewegung von der Verriegelungsstellung in die Zwischenstellung das Sperrelement solange um die Achse schwenkbar ist, bis eine Kontaktierung des Sperrelementes mit dem Bauteil vorliegt und anschließend die Achse mit dem Sperrelement entlang der Sicherheitsführung translatorisch in eine Richtung bewegbar ist, die zum Bauteil entgegengesetzt ist. Die Sicherheitsführung hat somit den Zweck, dass das Sperrelement im Falle einer Fehlstellung des Bauteils eine Ausgleichsbewegung unternehmen kann, wenn der Antrieb noch aktiviert ist. Hierdurch wird wirkungsvoll verhindert, dass eine etwaige Zerstörung im Bereich des Antriebes und/oder im Bereich des Sperrelementes entsteht. Gemäß der Erfindung kann das Sperrelement eine Verriegelungsstellung einnehmen, in der es durch eine Öffnung der erfindungsgemäßen Vorrichtung herausragt und in einer Wirkverbindung mit dem funktionswesentlichen Bauteil insbesondere der Lenksäule steht. Zum anderen kann das Sperrelement eine Entriegelungsstellung einnehmen, bei der es sich weitestgehend innerhalb der erfindungsgemäßen Vorrichtung befindet und nicht in das funktionswesentliche Bauteil, insbesondere nicht in die Lenksäule eingreift. Es hat sich nachteiligerweise gezeigt, dass beispielsweise bei einer Fehlstellung des Bauteils, insbesondere der Lenksäule, das Sperrelement nicht die Verriegelungsstellung einnehmen kann, da es beispielsweise beim Austritt aus der Vorrichtung auf einen Zahn der Lenksäule trifft. In diesem letzt genannten Fall bewegt sich das Sperrelement entlang der Sicherheitsführung, wobei die Achse, um die sich das Sperrelement drehen kann, sich dem funktionswesentlichen Bauteil entfernt. Diese beschriebene Kinematik erfolgt natürlich nur dann, wenn der Antrieb sich noch im aktivierten Zustand befindet. Während dieser Bewegung der Achse entlang der Sicherheitsführung kann in einer möglichen Ausführungsform gleichzeitig eine Zurückbewegung beziehungsweise eine Zurückschwenkung des Sperrelementes um die Achse erfolgen.

In einer möglichen Ausführungsform der Erfindung kann die Achse linear beweglich entlang der Sicherheitsführung gelagert sein. Ferner ist es denkbar, dass das Sperrelement ein Lagerelement aufweist, das in der Sicherheitsführung zwangsgeführt ist, wobei durch das Lagerelement die Achse verläuft, um die das Sperrelement translatorisch und rotatorisch bewegbar ist. Hierbei kann das Lagerelement ein gemeinsames Bauteil mit dem Sperrelement bilden. Ebenfalls ist es denkbar, dass das Lagerelement aus einem unterschiedlichen Material gefertigt ist im Hinblick auf das Sperrelement. Das Lagerelement ist gemäß der Erfindung als variables Lagerelement ausgestaltet, dass sich im Normalfall lediglich rotatorisch innerhalb der Sicherheitsführung bewegt, wobei der Normalfall den Fall definiert, wenn keine Fehlstellung des Bauteils vorliegt. Im Ausnahmefall, der durch die Fehlstellung des funktionswesentlichen Bauteils definiert ist, erfolgt eine translatorische Bewegung des Lagerelementes entlang der Sicherheitsführung.

Vorteilhaft ist, dass auf das Sperrelement eine Kraft wirkt, die in Richtung des Bauteils gerichtet ist, wodurch über eine bewusste Bewegung des Bauteils zur Behebung der Fehlstellung das Sperrelement aus seiner Zwischenstellung automatisch in die Verriegelungsstellung verfährt, wobei insbesondere die Kraft eine Federkraft ist. Das Sperrelement erreicht bei einer Fehlstellung des funktionswesentlichen Bauteils nicht seine eigentliche Position, die es in der Verriegelungsstellung des Sperrelementes erreichen würde. Das bedeutet, dass das Sperrelement mit einem wesentlichen Teil innerhalb des Gehäuses der erfindungsgemäßen Vorrichtung beziehungsweise innerhalb der Gehäuseführung der erfindungsgemäßen Vorrichtung verbleibt, wobei das Sperrelement mit seinem freien Ende das sich in der Fehlstellung befindende Bauteil kontaktiert. Das variable Lagerelement sowie die Sicherheitsführung ermöglichen trotz einer Fehlstellung des funktionswesentlichen Bauteils, dass das Sperrelement kontrolliert aus seiner Zwischenstellung in die Verriegelungsstellung verfährt, wenn eine Korrekturbewegung des funktionswesentlichen Bauteils, beispielsweise manuell erfolgt. Die auf das Sperrelement wirkende Kraft drückt während der Korrekturbewegung des funktionswesentlichen Bauteils das Sperrelement entsprechend in die Verriegelungsstellung.

In einer bevorzugten Ausführungsform der Erfindung weist der Antrieb ein Antriebsrad auf, das mit einer Führungsgeometrie ausgeführt ist, die mit einem Führungselement des Sperrelementes zusammenwirkt, indem bei einer Bewegung des Sperrelementes in seine jeweilige Stellung das Führungselement entlang der Führungsgeometrie verfährt. Hierbei ist es denkbar, dass die Führungsgeometrie zumindest eine bogenförmige und/oder spiralförmige Bahn aufweist, wobei die Bahn mit mindestens einem ersten Segment und mit mindestens einem zweiten Segment ausgeführt ist, wobei das erste Segment einen konstanten Radius zur Drehachse des Antriebsrades aufweist. Im Gegensatz dazu weist das zweite Segment einen bogenförmigen oder spiralförmigen Verlauf auf. Während das Führungselement entlang des ersten Segmentes geführt wird, verbleibt das Sperrelement unbeweglich in seiner jeweiligen Stellung. Erst wenn das Führungselement entlang des zweiten, gekrümmten Segmentes verfahren wird, entsteht eine Bewegung des Sperrelementes in die Verriegelungsstellung oder in die Entriegelungsstellung.

Vorzugsweise weist das Sperrelement einen ersten und einen zweiten Arm auf, wobei zwischen beiden Armen das Lagerelement angeordnet ist, wobei insbesondere am freien Ende des ersten Armes das Führungselement angeordnet ist. Somit kann das Sperrelement als ein Kipphebel ausgeführt sein, der um die Achse im Bereich des Lagerelementes drehbar innerhalb der Sicherheitsführung gelagert ist. Der zweite Arm weist ein freies Ende auf, welches in der Verriegelungsstellung des Sperrelementes in das funktionswesentliche Bauteil, insbesondere in die Lenksäule eingreift, und eine Bewegung des funktionswesentlichen Bauteils blockiert.

Beispielsweise kann das Führungselement als dünner Stift ausgeführt sein, der in die Bahn eingreift, insbesondere kann das Führungselement als Nadellager ausgebildet sein. Durch eine filigrane, dünne Ausbildung des Führungsstiftes sowie einer entsprechenden schmalen Bahn kann ein Antrieb geschaffen werden, der einen großen Freilauf ermöglicht, bei dem im aktivierten Zustand des Antriebes das Sperrelement unbeweglich in der Sicherheitsführung verbleibt. Der Zweck eines Freilaufes bei dieser erfindungsgemäßen Vorrichtung ist, dass trotz eines aktivierten Zustandes des Antriebes, bei dem sich wesentliche Bauteile des Antriebes zumindest teilweise in einem Bewegungszustand befinden, das Sperrelement in seiner jeweiligen Stellung unbeweglich verharrt. Somit können auch Motoren für die Bewegung des Sperrelementes zum Einsatz kommen, die lediglich mit einer sehr einfachen Motorsteuerung arbeiten. Obwohl das Sperrelement seine Verriegelungsstellung oder Entriegelungsstellung längst erreicht hat, kann der Motor ohne Probleme noch etwas nachlaufen. Dieses gilt entsprechend für einen Vorlauf.

Vorteilhafterweise kann die Vorrichtung zur Verlagerung des Sperrelementes durch eine Steuereinheit überwacht werden, die beispielsweise fahrzeugseitig angeordnet sein kann oder die innerhalb der erfindungsgemäßen Vorrichtung integriert ist. Aus sicherheitstechnischen Gründen kann es vorteilhaft sein, wenn neben der Erfassung des Drehweges oder Drehwinkels des Antriebsrades auch bestimmte Positionen des Sperrelementes, der Achse, des Lagerelementes oder des funktionswesentlichen Bauteils erfasst werden. Dieses kann beispielsweise durch Sensoren, insbesondere Magnetfeldsensoren, erfolgen, die das magnetische Feld eines auf dem Antriebsrad oder dem Sperrelement oder der Lenksäule oder dem Lagerelement angebrachten Permanentmagneten erfassen können. Der Sensor kann alternativ als Inkrementalgeber ausgeführt sein, der auch fotoelektrisch oder magnetisch das Antriebsrad abtastet. Hierdurch kann eine elektronische Steuerung die Funktionsfähigkeit der mechanischen Kopplung zwischen dem Antriebsrad, dem Sperrelement, dem Lagerelement, dem funktionswesentlichen Bauteil und der Steuereinheit überwachen sowie etwaige Manipulationen erkennen.

Das Sperrelement kann aus einem Metall, insbesondere aus Stahl hergestellt sein. Die Materialdicke ist dabei so bemessen, dass weitestgehend eine Materialzerstörung ausgeschlossen werden kann. In einer alternativen Ausführungsform können das Sperrelement sowie Bauteile des Antriebes in Spritzgusstechnik hergestellt sein. Vorteilhafterweise ist das freie Ende des Sperrelementes in seiner Kontur abgerundet und/oder angeschrägt ausgeführt, wodurch ein Einrasten des Sperrelementes in eine Öffnung/Nut des funktionswesentlichen Bauteils erleichtert wird.

Zweckmäßigerweise ist ein Gehäuse vorgesehen, innerhalb dessen die erfindungsgemäße Vorrichtung, insbesondere die wesentlichen Bauteile der erfindungsgemäßen Vorrichtung, wie Sperrelement, Antrieb, etc. angeordnet sind. Vorteilhafterweise weist das Gehäuse Aufnahmebereiche auf, in denen die genannten Bauteile aufgenommen sind, wodurch eine kompakte Bauform mit wenigen Bauteilen realisiert werden kann. In einer möglichen Ausführungsform der Erfindung weist das Gehäuse zumindest zwei Gehäuseschalen auf, innerhalb dieser die Getriebebauteile, das Sperrelement, etc. angeordnet sind.

In einer bevorzugten Ausführungsform der Erfindung kann die Führungsgeometrie mit einer Sicherheitskontur ausgebildet sein, die direkt auf den ersten Arm des Sperrelementes wirkt, wenn das Sperrelement aus der Verriegelungsstellung bewegt wird, wodurch das Führungselement entlastet wird. Es hat sich gezeigt, dass in gewissen Situationen hohe Auszugskräfte auf das Sperrelement einwirken können, die etwaige Materialschädigungen an wesentlichen Bauteilen der erfindungsgemäßen Vorrichtung, insbesondere am Führungselement entstehen lassen. Die hohen Auszugskräfte entstehen beispielsweise dann, wenn sich das Sperrelement in der Verriegelungsstellung befindet und beispielsweise derart am funktionswesentlichen Bauteil angreift und diesen kontaktiert, dass eine erhöhte Auszugskraft notwendig ist, um das Sperrelement aus der Verriegelungsstellung in Richtung Entriegelungsstellung zu überführen. In einem derartigen Fall übt die Sicherheitskontur direkt auf den ersten Arm des Sperrelementes eine entsprechende Kraft aus, während das Antriebsrad durch den Antrieb bewegt wird. Somit besteht nicht die Gefahr, dass etwaig auf das Führungselement wirkende Kräfte das Führungselement zerstören können.

In einer möglichen Ausführungsform der erfindungsgemäßen Vorrichtung kann sich die Sicherheitskontur vorsprungartig aus dem Antriebsrad erstrecken und insbesondere ein Bestandteil eines Plateaus sein. Zudem kann die Sicherheitskontur zumindest teilweise bogenförmig und/oder spiralförmig ausgebildet sein. Erfindungsgemäß ist es denkbar, dass die Sicherheitskontur benachbart zur Bahn verläuft, wobei die Sicherheitskontur dem zweiten Segment der Bahn zugeordnet ist.

In einer vorteilhaften Ausführungsform der Erfindung weist der elektrische Motor des Antriebes ein Schneckenrad auf, das an der Antriebsseite des Antriebsrades angreift, wodurch hohe Drehmomente auf das Antriebsrad übertragen werden können. Ein weiterer Vorteil ist, dass durch den Einsatz des Schneckenrades der Antrieb selbsthemmend ausgeführt ist, das bedeutet, dass über einen unberechtigten Zugang in die erfindungsgemäße Vorrichtung das Antriebsrad nicht ohne Weiteres um seine Drehachse bewegt werden kann, um eine entsprechende Verlagerung des Sperrelementes zu bewirken.

Die erfindungsgemäße Vorrichtung kann als elektrische Lenkungsverriegelung für Fahrzeuge zum Einsatz kommen, wobei die Vorrichtung zu dem problemlos mit insbesondere so genannten "Keyless-Entry-Systemen" kombinierbar ist. Die erfindungsgemäße Vorrichtung kann von außen, beispielsweise per Funksignal oder nach einem stattgefundenen Datenaustausch, aktiviert werden. Dabei ermöglicht die Erfindung selbstverständlich eine Rückmeldung dahin gehend, ob die betreffende Vorrichtung zuverlässig das funktionswesentliche Bauteil, insbesondere die Lenksäule oder den Gangschalthebel des Kraftfahrzeuges, blockiert oder nicht. Dies kann zum Beispiel durch eine optische oder akustische Meldevorrichtung innerhalb des Kraftfahrzeuges dargestellt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: die erfindungsgemäße Vorrichtung mit einem Sperrelement, das sich in seiner Verriegelungsstellung befindet,
- Figur 2: die Vorrichtung gemäß Figur 1, wobei das Sperrelement sich in der Entriegelungsstellung befindet,
- Figur 3: die erfindungsgemäße Vorrichtung gemäß Figur 1, wobei sich das Sperrelement in einer Zwischenstellung befindet und

- Figur 4: eine weitere mögliche Ansicht auf ein weiteres Ausführungsbeispiel, bei dem das Sperrelement sich in der Verriegelungsstellung befindet, wobei das Sperrelement an der Lenksäule sich verspannt hat und höhere Auszugskräfte notwendig sind, um das Sperrelement aus der Verriegelungsstellung in Richtung Entriegelungsstellung zu ziehen.

Die folgende Figurenbeschreibung zeigt eine mögliche Ausführungsform einer Vorrichtung zur Verlagerung eines bewegbaren Sperrelementes 10 eines funktionswesentlichen Bauteils 50, das im vorliegenden Fall eine Lenksäule 50 eines Kraftfahrzeuges ist. Die Vorrichtung weist einen Antrieb 20 auf, der ein Antriebsrad 21 aufweist, das mit einer Führungsgeometrie 22 ausgeführt ist, die mit einem Führungselement 13 des Sperrelementes 10 zusammenwirkt. Die Führungsgeometrie 22 weist eine zumindest bereichsweise spiralförmige Bahn 23 auf. Hierbei weist die Bahn 23 mehrere Segmente 23.1, 23.2 auf. Das erste Segment 23.1 weist hierbei einen konstanten Radius zur Drehachse 24 des Antriebsrades 21 auf. Ferner ist die Bahn 23 mit einem weiteren Abschnitt als zweites Segment 23.2 ausgestattet, welches spiralförmig zur Drehachse 24 verläuft und somit keinen konstanten Radius zur Drehachse 24 aufweist. Zudem ist ein weiteres erstes Segment 23.1 vorgesehen, wobei das zweite Segment 23.2 zwischen beiden ersten Segmenten 23.1 angeordnet ist.

Zudem weist der Antrieb 20 einen elektrischen Motor 25 auf, der mit einem Schneckenrad 27 ausgeführt ist. Das Antriebsrad 21 weist zudem eine Antriebsseite 21.1 und eine Abtriebsseite 21. 2 auf, wobei der elektrische Motor 25 mit seinem Schneckenrad 27 an der Antriebsseite 21.1 angreift. Die Antriebsseite 21.1 ist hierbei mit einer entsprechenden Verzahnung ausgestattet. Die Abtriebsseite 21.2 wird durch die Führungsgeometrie 22 gebildet, die eine entsprechende Bewegung des Führungselementes 13 und des Sperrelementes 10 bewirkt, worauf im Folgenden noch eingegangen wird.

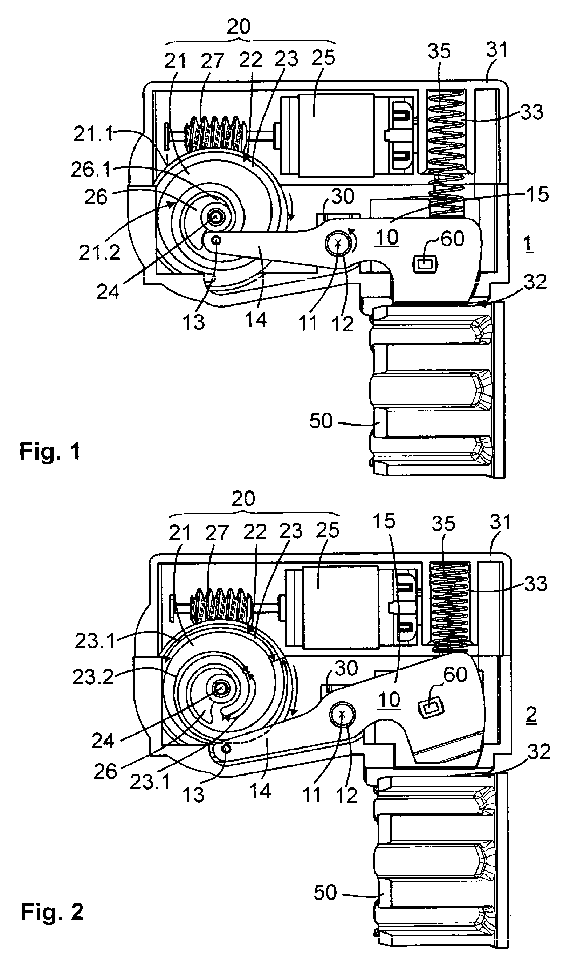

Der Antrieb 20 ist gemäß dem vorliegenden Ausführungsbeispiel mit dem Sperrelement 10 derart in Wirkverbindung, dass das Sperrelement 10 zwischen einer Verriegelungsstellung 1, die in Figur 1 gezeigt ist, und einer Entriegelungsstellung 2, die in Figur 2 gezeigt ist, bewegbar ist. In der Verriegelungsstellung 1 greift hierbei das Sperrelement 10 in die Lenksäule 50 ein, so dass die Lenksäule 50 in ihrer Bewegung blockiert ist. In der Entriegelungsstellung 2 des Sperrelementes 10 weist das Sperrelement 10 einen entsprechenden Abstand zur Lenksäule 50 auf, so dass die Lenksäule 50 entsprechend bewegt werden kann.

Gemäß des dargestellten Ausführungsbeispiels weist das Sperrelement 10 einen ersten Arm 14 und einen zweiten Arm 15 auf, wobei zwischen beiden Armen 14, 15 ein Lagerelement 12 angeordnet ist. Das Lagerelement 12 ist in einer Sicherheitsführung 30 zwangsgeführt gehalten. Die Sicherheitsführung 30 ist im vorliegenden Ausführungsbeispiel Bestandteil eines Gehäuses 31 der erfindungsgemäßen Vorrichtung. Das Gehäuse 31 kann zum Beispiel aus zwei Schalen bestehen, die die wesentlichen Bauteile der erfindungsgemäßen Vorrichtung, die in den Figuren 1 bis 4 zu erkennen sind, sicher umfasst und umschließt. Jede Gehäuseschale 31 kann die entsprechende Sicherheitsführung 30 aufweisen.

Während nun der Antrieb 20 aktiviert ist, kann das Sperrelement 10 zwischen seiner Verriegelungsstellung 1 und der Entriegelungsstellung 2 sich bewegen, wobei gemäß den Figuren 1 und 2 zu erkennen ist, dass das Sperrelement 10 um eine Achse 11 sich verschwenkt, wenn es sich in seine jeweilige Stellung 1, 2 bewegt. Die Achse 11 erstreckt sich hierbei durch das Lagerelement 12.

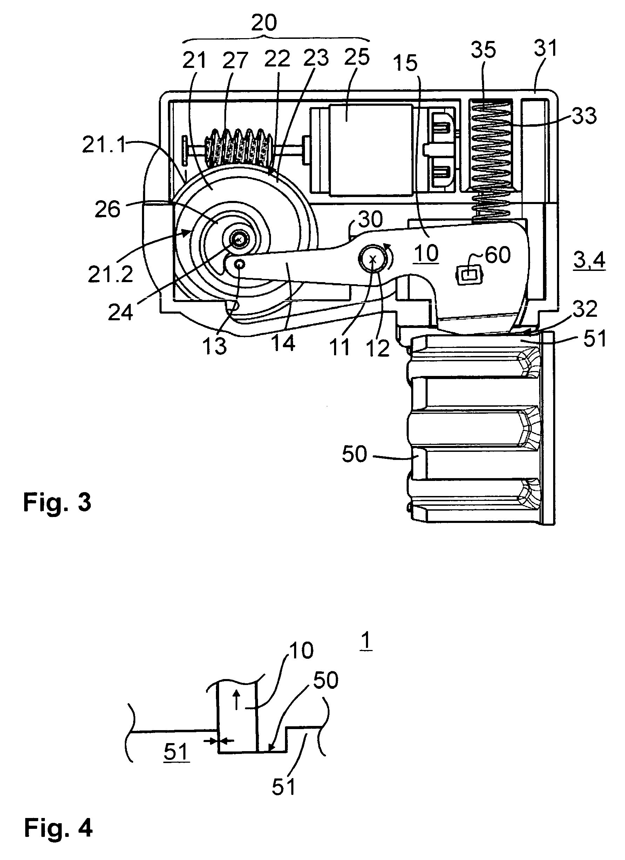

Es kann nun der Fall eintreten, dass die Lenksäule 50 eine Fehlstellung einnimmt, bei der sich beispielsweise ein Zahn 51 der Lenksäule 50 im Bereich der Gehäuseöffnung 32 befindet, so dass eine Verriegelungsstellung 1 des Sperrelementes 10 nicht bewirkt werden kann (siehe Figur 3). In diesem Fall ist die Vorrichtung derart ausgeführt, dass das Sperrelement 10 eine Zwischenstellung 3 einnimmt, die zwischen der Verriegelungsstellung 1 und der Entriegelungsstellung 2 liegt. Soll nun das Sperrelement 10 aus der Entriegelungsstellung 2 aus Figur 2 in die Verriegelungsstellung 1 bewegt werden, wobei die genannte Fehlstellung der Lenksäule 50 vorliegt, bewirkt der aktivierte Antrieb 20, dass zunächst das Sperrelement 10 um die Achse 11 im Uhrzeigersinn verschwenkt wird. Hierbei bewegt sich das Führungselement 13 entlang des rotierenden Antriebsrades 21, wobei das Führungselement 13 in der Bahn 23 entlang gleitet und sich gleichzeitig der Abstand zwischen dem Führungselement 13 und der Drehachse 24 verringert. Gleichzeitig erfolgt eine Schwenkbewegung des Sperrelementes 10 um die Achse 11 bis der zweite Arm 15 des Sperrelementes 10, insbesondere das freie Endes des zweiten Armes 15 den Zahn 51 der sich in einer Fehlstellung befindenden Lenksäule 50 kontaktiert, welches in Figur 3 gezeigt ist. Damit es nicht zu einer Materialzerstörung innerhalb der erfindungsgemäßen Vorrichtung kommt, verschiebt sich das Lagerelement 12 bei einer Kontaktierung des Sperrelementes 10 mit dem Zahn 51 translatorisch entlang der Sicherheitsführung 30 in einer Richtung, die zum Bauteil 50 entgegengesetzt ist. Somit stellt diese translatorische Bewegung des Sperrelementes 10 entlang der Sicherheitsführung ein zuverlässiges Mittel dar, um eine etwaige Beschädigung oder Funktionsstörung innerhalb der erfindungsgemäßen Vorrichtung auszuschließen. Das Lagerelement 12 ist entsprechend der Sicherheitsführung 30 angepasst, so dass eine zuverlässige Linearverschiebung des Sperrelementes 10 entlang der Sicherheitsführung 30 gewährleistet ist. Während das Sperrelement 10 entlang der Sicherheitsführung 30 sich nach oben bewegt, erfolgt gleichzeitig eine gewisse Drehung des Sperrelementes 10 um die Achse 11, so dass sich das Antriebsrad 21 noch weiter drehen kann und somit das Führungselement 13 des Sperrelementes 10 innerhalb der Bahn 23 mitgeführt wird. Das Führungselement 13 ist hierbei zwangsgeführt innerhalb der Bahn 23 angeordnet.

Wie in den Figuren 1 bis 3 zu erkennen ist, ist eine Feder 35 innerhalb des Gehäuses 31 vorgesehen, die sich in einer Aufnahme 33 des Gehäuses 31 befindet. Diese Feder 35 ist als Druckfeder hier ausgeführt und übt eine Kraft auf das Sperrelement 10 aus, und zwar in jeder Stellung 1, 2, 3 des Sperrelementes 10. Befindet sich beispielsweise das Sperrelement 10 in seiner Zwischenstellung 3, kann über eine manuelle Bewegung der Lenksäule 50 die Lenksäule 50 aus ihrer Fehlstellung 4 bewegt werden, wodurch die Feder 35 das Sperrelement 10 aus der Zwischenstellung 3 in die Verriegelungsstellung 1 drückt.

Im vorliegenden Ausführungsbeispiel weist der Antrieb 20 einen großen Freilauf auf, der durch zwei erste Segmente 23.1 der Bahn 23 verwirklicht ist. Diese ersten Segmente 23.1 weisen einen konstanten Abstand zur Drehachse 24 des Antriebsrades 21 auf. Wenn das Führungselement 13 sich im ersten Segment 23.1 der Bahn 23 befindet, erfolgt keine Kippbewegung des Sperrelementes 10 um die Achse 11. Erst wenn das Führungselement 13 in das zweite Segment 23.2 der Bahn 23 hineinfährt, wird über die Führungsgeometrie 22 auf das Führungselement 13 eine Kraft ausgeübt, die eine Schwenkbewegung des Sperrelementes 10 hervorruft. Somit kann eine Bewegung des Sperrelementes 10 zwischen seiner Verriegelungsstellung 1 und seiner Entriegelungsstellung 2 erfolgen, wobei gleichzeitig die Achse 11 sowie das Lagerelement 12 seine Position innerhalb der Sicherheitsführung 30 unverändert beibehalten.

Es kann nun der seltene Fall eintreten, dass das Sperrelement 10 sich in der Verriegelungsstellung 1 befindet, wobei eine Verspannung zwischen den Elementen Lenksäule 50 sowie Sperrelement 10 vorliegt (siehe Figur 4). In einem derartigen Zustand der erfindungsgemäßen Vorrichtung hat es sich gezeigt, dass höhere Auszugskräfte für das Sperrelement 10 notwendig sind, um das Sperrelement 10 aus einem derartigen verspannten Zustand, der exemplarisch in Figur 4 gezeigt ist, in Richtung Entriegelungsstellung 2 zu überführen. Um einer etwaigen Materialzerstörung im Antrieb, am Führungselement 13 etc. vorzubeugen, ist die Führungsgeometrie 22 mit einer Sicherheitskontur 26 ausgebildet, die auf den ersten Arm 14 des Sperrelementes 10 wirkt, wenn das Sperrelement 10 aus der verspannten Verriegelungsstellung 1 bewegt wird. Die Sicherheitskontur 26 ist hierbei in den Figuren 1 bis 3 gezeigt. Hierbei erstreckt sich die Sicherheitskontur 26 vorsprungartig aus dem Antriebsrad 21 und ist ein Bestandteil eines Plateaus. Die verspannte Verriegelungsstellung 1 könnte beispielsweise in Figur 1 vorliegen. Wenn nun das Antriebsrad 21 im Uhrzeigersinn um die Drehachse 24 bewegt wird, verfährt zunächst das Führungselement 13 entlang des ersten Segmentes 23.1 der Bahn 23, so dass keine Bewegung des Sperrelementes 10 erfolgt. Nachdem sich das Antriebsrad 21 um einen bestimmten Winkelbereich gedreht hat, kommt es zu einer Kontaktierung der Sicherheitskontur 26 mit dem ersten Arm 14 des Sperrelementes 10. Diese erste Kontaktierung findet in dem Bereich statt, der das Bezugszeichen 26.1 trägt. Das bedeutet, dass nicht auf das Führungselement 13 über die Bahn 23 eine Kraft ausgeübt wird, um das Sperrelement 10 aus seiner verspannten Verriegelungslage 1 zu bewegen, sondern die Sicherheitskontur 26 direkt auf den mechanisch stabilen ersten Arm 14 wirkt, um entsprechend hohe Auszugskräfte auf das Sperrelement 10 auszuüben.

In Figur 1 bis Figur 3 ist beispielhaft gezeigt, dass ein Sensorelement 60 am Sperrelement 10 angeordnet sein kann, um die entsprechende Position des Sperrelementes 10 im laufenden Betrieb zu ermitteln. Selbstverständlich können auch die Bauteile, wie Antriebsrad 21, Lagerelement 12, Lenksäule 50 etc. mit entsprechenden Sensoren ausgeführt sein, um ihre exakten Positionen erfassen zu können.

### Bezugszeichenliste

- 1: Verriegelungsstellung
- 2: Entriegelungsstellung
- 3: Zwischenstellung
- 4: Fehlstellung (Bauteil)
- 10: Sperrelement
- 11: Achse
- 12: Lagerelement
- 13: Führungselement
- 14: erster Arm
- 15: zweiter Arm
- 20: Antrieb
- 21: Antriebsrad
- 21.1: Antriebsseite
- 21.2: Abtriebsseite
- 22: Führungsgeometrie
- 23: Bahn
- 23.1: erstes Segment
- 23.2: zweites Segment
- 24: Drehachse
- 25: elektrischer Motor
- 26: Sicherheitskontur
- 27: Schneckenrad
- 30: Sicherheitsführung
- 31: Gehäuse
- 32: Öffnung
- 33: Aufnahme
- 35: Feder
- 50: Lenksäule, Bauteil
- 51: Zahn
- 60: Sensorelement

## Patentansprüche

1. Vorrichtung zur Verlagerung eines bewegbaren Sperrelementes (10) eines funktionswesentlichen Bauteils (50), insbesondere einer Lenksäule (50) eines Kraftfahrzeuges, mit einem Antrieb (20), der mit dem Sperrelement (10) der Vorrichtung derart in mechanischer Wirkverbindung steht, dass das Sperrelement (10) zwischen einer Verriegelungsstellung (1) und einer Entriegelungsstellung (2) bewegbar ist, wobei in der Verriegelungsstellung (1) das Sperrelement (10) in das funktionswesentliche Bauteil (50) eingreift und
in der Entriegelungsstellung (2) das Sperrelement (10) losgelöst vom funktionswesentlichen Bauteil (50) ist, und
das Sperrelement (10) an einer Achse (11) drehbar gelagert ist, um eine Bewegung zwischen der Verriegelungsstellung (1) und der Entriegelungsstellung (2) auszuführen, **dadurch gekennzeichnet, dass** eine Sicherheitsführung (30) der Achse vorgesehen ist, die bei einer Fehlstellung (4) des Bauteils (50) bewirkt, dass das Sperrelement (10) in eine Zwischenstellung (3) bringbar ist, die zwischen der Verriegelungsstellung (1) und der Entriegelungsstellung (2) liegt, wobei die Sicherheitsführung (30) derart ausgeführt ist, dass während der Bewegung zwischen der Verriegelungsstellung (1) und der Entriegelungsstellung (2) das Sperrelement (10) lediglich um die Achse (11) schwenkt, wobei die Achse (11) ihre Position in der Sicherheitsführung (30) beibehält, und
im Falle der Fehlstellung (4) des Bauteils (50) bei der Bewegung von der Verriegelungsstellung (1) in die Zwischenstellung (3) das Sperrelement (10) solange um die Achse (11) schwenkbar ist bis eine Kontaktierung des Sperrelementes (10) mit dem Bauteil (50) vorliegt und anschließend die Achse (11) mit dem Sperrelement (10) entlang der Sicherheitsführung (30) translatorisch in eine Richtung bewegbar ist, die zum Bauteil (50) entgegengesetzt ist.

2. Vorrichtung nach Anspruch 1,
**dadurch gekennzeichnet,**
**dass** die Achse (11) linear beweglich entlang der Sicherheitsführung (30) beweglich ist.

3. Vorrichtung nach Anspruch 1 oder 2,
**dadurch gekennzeichnet,**
**dass** das Sperrelement (10) ein Lagerelement (12) aufweist, das in der Sicherheitsführung (30) zwangsgeführt ist, wobei durch das Lagerelement (12) die Achse (11) verläuft, um die das Sperrelement (10) translatorisch und rotatorisch bewegbar ist.

4. Vorrichtung nach einem der vorhergehenden Ansprüche,
**dadurch gekennzeichnet,**
**dass** auf das Sperrelement (10) eine Kraft wirkt, die in Richtung des Bauteils (50) gerichtet ist, wodurch über eine bewusste Bewegung des Bauteils (50) zur Behebung der Fehlstellung das Sperrelement (10) aus seiner Zwischenstellung (3) automatisch in die Verriegelungsstellung (1) verfährt, wobei insbesondere die Kraft eine Federkraft ist.

5. Vorrichtung nach einem der vorhergehenden Ansprüche,
**dadurch gekennzeichnet,**
**dass** der Antrieb (20) ein Antriebsrad (21) aufweist, das mit einer Führungsgeometrie (22) ausgeführt ist, die mit einem Führungselement (13) des Sperrelementes (10) zusammenwirkt, indem bei einer Bewegung des Sperrelementes (10) in seine jeweilige Stellung (14, 15) das Führungselement (13) entlang der Führungsgeometrie (22) verfährt.

6. Vorrichtung nach Anspruch 5,
**dadurch gekennzeichnet,**
**dass** die Führungsgeometrie (22) zumindest eine bogenförmige und/oder spiralförmige Bahn (23) aufweist, wobei die Bahn (23) mit einem ersten Segment (23.1) und einem zweiten Segment (23.2) ausgeführt ist, wobei das erste Segment (23.1) einen konstanten Radius zur Drehachse (24) des Antriebsrades (21) aufweist.

7. Vorrichtung nach Anspruch 5 oder 6,
**dadurch gekennzeichnet,**
**dass** das Sperrelement (10) einen ersten und einen zweiten Arm (14, 15) aufweist, wobei zwischen beiden Armen (14, 15) das Lagerelement (12) angeordnet ist, wobei insbesondere am freien Ende des ersten Armes (14) das Führungselement (13) angeordnet ist.

8. Vorrichtung nach einem der vorhergehenden Ansprüche,
**dadurch gekennzeichnet,**
**dass** das Führungselement (13) als dünner Stift ausgeführt ist, der in die Bahn (23) eingreift, insbesondere dass das Führungselement (13) als Nadellager ausgebildet ist.

9. Vorrichtung nach einem der vorhergehenden Ansprüche
**dadurch gekennzeichnet,**
**dass** das Antriebsrad (21) eine Antriebsseite (21.1) und eine Abtriebsseite (21.2) aufweist, wobei ein elektrischer Motor (25) an der Antriebsseite (21.1) angreift und die Abtriebsseite (21.2) durch die Führungsgeometrie (22) gebildet ist, die eine Bewegung des Führungselementes (13) und des Sperrelementes (10) bewirkt.

10. Vorrichtung nach einem der vorhergehenden Ansprüche,
**dadurch gekennzeichnet,**
**dass** der Antrieb (20) einen Freilauf, insbesondere einen Vorlauf und einen Nachlauf aufweist, bei dem das Sperrelement (10) in seiner jeweiligen Stellung (1, 2, 3) verbleibt, während der Antrieb (20) aktiviert ist.

11. Vorrichtung nach einem der vorhergehenden Ansprüche,
**dadurch gekennzeichnet,**
**dass** zumindest ein Sensorelement (10) vorgesehen ist zur Erfassung der Position des Sperrelementes (10) und/oder des Bauteils (50) und/oder des Antriebsrades (21) und/oder des Lagerelementes (12).

12. Vorrichtung nach einem der vorhergehenden Ansprüche,
**dadurch gekennzeichnet,**
**dass** die Führungsgeometrie (22) mit einer Sicherheitskontur (26) ausgebildet ist, die auf den ersten Arm (14) des Sperrelementes (10) wirkt, wenn das Sperrelement (10) aus der Verriegelungsstellung (1) bewegt wird, wodurch das Führungselement (13) entlastet wird.

13. Vorrichtung nach Anspruch 12,
**dadurch gekennzeichnet,**
**dass** die Sicherheitskontur (26) vorsprungsartig aus dem Antriebsrad (21) sich erstreckt und insbesondere ein Bestandteil eines Plateaus ist.

14. Vorrichtung nach Anspruch 12 oder 13,
**dadurch gekennzeichnet,**
**dass** die Sicherheitskontur (26) zumindest teilweise bogenförmig und/oder spiralförmig ausgebildet ist.

15. Vorrichtung nach einem der vorhergehenden Ansprüche,
**dadurch gekennzeichnet,**
**dass** die Sicherheitskontur (26) benachbart zur Bahn (23) verläuft, wobei die Sicherheitskontur (26) dem zweiten Segment (23.2) der Bahn (23) zugeordnet ist.

## Claims

1. Apparatus for displacing a movable blocking element (10) of a function essential construction element (50), particularly a steering column (50) of a vehicle, with an actuator (20), which is in an operative connection with the blocking element (10) of the axis (11) in a way, that the blocking element (10) is movable between a locking position (1) and an unlocking position (2), wherein
in the locking position (1) the blocking element (10) is engaging with the functional essential construction element (50) and
in the unlocking position (2) the blocking element (10) is uncoupled from the functional essential construction element (50) and the blocking element (10) is pivotably mounted at the axis (11), in order to achieve a movement between the locking position (1) and the unlocking position (2)
**characterized in that**
a safety guidance (30) of the apparatus is intended which affects during a false position (4) of the construction element (50), that the blocking element (10) can achieve an intermediate position (3), which is located between the locking position (1) and the unlocking position (2), wherein
the safety guidance (30) is accomplished in a way that during the movement between the locking position (1) and the unlocking position (2) the blocking element (10) is pivoting only about the axis (11), wherein the axis (11) is keeping its position in the safety guidance (30), and
in case of the false position (4) of the construction element (50) during the movement from the locking position (1) into the intermediate position (3) the blocking element (10) is pivotable about the axis (11) until the blocking element (10) contacts the construction element (50) and subsequently the axis (11) is translatably movable in one direction with the blocking element (10) along the safety guidance (30) which is opposing to the construction element (50).

2. Apparatus according to claim 1,
**characterized in that**,
the axis (11) is linear movable along the safety guidance (30).

3. Apparatus according to claim 1 or 2,
**characterized in that**,
the blocking element (10) comprises a bearing element (12), which is positively driven in the safety guidance (30) wherein the axis (11) runs through the bearing element (12), around which the blocking element (10) is movable in a translational and rotatory way.

4. Apparatus according to one of the preceding claims,
**characterized in that**,
a force is affecting the blocking element (10), which is directed into the direction of the construction element (50), whereby the blocking element (10) automatically moves from the intermediate position (3) into the locking position (1) via a conscious movement of the construction element (50) for removement of the false position, wherein particularly the force is a spring power.

5. Apparatus according to one of the preceding claims,
**characterized in that**,
the actuator (20) comprises an actuation wheel (21), which is affected with a guidance geometry (22), which interacts with a guiding element (13) of the blocking element (10), by moving the guiding element (13) along the guidance geometry (22) during a movement of the blocking element (10) in its respective position (1, 2).

6. Apparatus according to claim 5,
**characterized in that**,
the guidance geometry (22) comprises at least an arch like and/or a spiral like path (23), wherein the path (23) is designed with a first segment (23.1) and a second segment (23.2), wherein the first segment (23.1) comprises a constant radius towards the rotation axis (24) of the actuation wheel (21).

7. Apparatus according to claims 5 or 6,
**characterized in that**,
the blocking element (10) comprises a first and a second arm (14, 15), wherein between both arms (14, 15) the bearing element (12) is arranged, wherein particularly at the free edge of the first arm (14) the guiding element (13) is assembled.

8. Apparatus according to one of the preceding claims,
**characterized in that**,
the guiding element (13) is designed as a thin pin, which is engaging into the path (23), particularly that the guiding element (13) is designed as a needle bearing.

9. Apparatus according to one of the preceding claims,
**characterized in that**,
the actuation wheel (21) comprises an actuation side (21.1) and an output side (21.2), wherein an electric motor (25) is engaging into the actuation side (21.1) and the output side (21.2) is built by the guidance geometry (22), which affects a movement of the guiding element (13) and the blocking element (10).

10. Apparatus according to one of the preceding claims,
**characterized in that**,
the actuator (20) comprises a free wheeling, particularly a cutting stroke and a cast down, by which the blocking element (10) remains in its respective position (1, 2, 3), during an activation of the actuator (20).

11. Apparatus according to one of the preceding claims,
**characterized in that**,
at least a sensor element (60) is provided for the determination of the position of the blocking element (10) and/or the construction element (50) and/or the actuation wheel (21) and/or the bearing element (12).

12. Apparatus according to one of the preceding claims,
**characterized in that**,
the guiding geometry (22) is formed with a safety outline (26), which affects the first arm (14) of the blocking element (10), in case the blocking element (10) is moved out of the locking position (1), whereby the guiding element (13) is released.

13. Apparatus according to claim 12,
**characterized in that**,
the safety outline (26) is reaching out of the actuation wheel (21) in a projection like manner and particularly is part of a plateaus.

14. Apparatus according claims 12 or 13,
**characterized in that**,
the safety outline (26) is formed at least partially in an arch like and/or a spiral like manner.

15. Apparatus according to one of the preceding claims,
**characterized in that**,
the safety outline (26) runs adjacent to the path (23), wherein the safety outline (26) is assigned to the second segment (23.2) of the path (23).

## Revendications

1. Dispositif conçu pour déplacer un élément mobile de blocage (10) d'une pièce structurelle (50) fonctionnellement essentielle, notamment d'une colonne de direction (50) d'un véhicule automobile, comportant un entraînement (20) en liaison mécanique opérante avec l'élément de blocage (10) dudit dispositif, de façon telle que ledit élément de blocage (10) soit mobile entre une position de verrouillage (1) et une position de déverrouillage (2), sachant
que, dans la position de verrouillage (1), l'élément de blocage (10) pénètre dans la pièce structurelle (50) fonctionnellement essentielle,
que, dans la position de déverrouillage (2), ledit élément de blocage (10) est dissocié d'avec ladite pièce structurelle (50) fonctionnellement essentielle, et
que ledit élément de blocage (10) est monté à rotation autour d'un axe (11), en vue d'accomplir un mouvement entre ladite position de verrouillage (1) et ladite position de déverrouillage (2),
**caractérisé par le fait**
**qu'**il est prévu un guide de sûreté (30) dédié à l'axe (11) et faisant en sorte que, lorsque la pièce structurelle (50) occupe une position défectueuse (4), l'élément de blocage (10) puisse être amené à une position intermédiaire (3) située entre la position de verrouillage (1) et la position de déverrouillage (2),
ledit guide de sûreté (30) étant réalisé de telle sorte que ledit élément de blocage (10) pivote uniquement autour de l'axe (11) au cours du mouvement entre ladite position de verrouillage (1) et ladite position de déverrouillage (2), ledit axe (11) conservant alors son emplacement dans ledit guide de sûreté (30), et que,
dans le cas où ladite pièce structurelle (50) occupe ladite position défectueuse (4), ledit élément de blocage (10) puisse pivoter autour dudit axe (11), au cours du mouvement de ladite position de verrouillage (1) à ladite position intermédiaire (3), jusqu'à l'instauration d'une venue en contact dudit élément de blocage (10) avec ladite pièce structurelle (50), ledit axe (11) pouvant ensuite être animé le long dudit guide de sûreté (30), conjointement audit élément de blocage (10), d'un mouvement de translation dans une direction pointant à l'opposé de ladite pièce structurelle (50).

2. Dispositif selon la revendication 1,
**caractérisé par le fait**
**que** l'axe (11) est doué de mobilité linéaire le long du guide de sûreté (30).

3. Dispositif selon la revendication 1 ou 2,
**caractérisé par le fait**
**que** l'élément de blocage (10) présente un élément de montage (12) guidé à force dans le guide de sûreté (30), sachant que l'axe (11), autour duquel ledit élément de blocage (10) peut être animé de mouvements translatoires et rotatoires, passe par ledit élément de montage (12).

4. Dispositif selon l'une des revendications précédentes,
**caractérisé par le fait**
**que** l'élément de blocage (10) est soumis à l'action d'une force orientée en direction de la pièce structurelle (50), de sorte que, moyennant un mouvement délibéré de ladite pièce structurelle (50) visant à supprimer la position défectueuse, ledit élément de blocage (10) se déplace automatiquement de sa position intermédiaire (3) à la position de verrouillage (1), ladite force se présentant, en particulier, comme une force élastique.

5. Dispositif selon l'une des revendications précédentes,
**caractérisé par le fait**
**que** l'entraînement (20) comporte une roue d'entraînement (21) dotée d'un profil géométrique de guidage (22) qui coopère avec un élément de guidage (13) de l'élément de blocage (10)
en ce sens que, lors d'un mouvement dudit élément de blocage (10) vers sa position respective (1, 2), ledit élément de guidage (13) se déplace le long dudit profil géométrique de guidage (22).

6. Dispositif selon la revendication 5,
**caractérisé par le fait**
**que** le profil géométrique de guidage (22) offre au moins une piste (23) de configuration en arc de cercle et/ou spiroïdale, laquelle piste (23) est pourvue d'un premier segment (23.1) et d'un second segment (23.2), ledit premier segment (23.1) présentant un rayon constant vis-à-vis de l'axe de rotation (24) de la roue d'entraînement (21).

7. Dispositif selon la revendication 5 ou 6,
**caractérise par le fait**
**que** l'élément de blocage (10) comprend des premier et second bras (14, 15), l'élément de montage (12) étant interposé entre les deux bras (14, 15), l'élément de guidage (13) étant situé, en particulier, à l'extrémité libre du premier bras (14).

8. Dispositif selon l'une des revendications précédentes,
**caractérisé par le fait**
**que** l'élément de guidage (13) est réalisé sous la forme d'une broche mince pénétrant dans la piste (23) ; notamment par le fait que ledit élément de guidage (13) se présente comme un palier à aiguilles.

9. Dispositif selon l'une des revendications précédentes,
**caractérisé par le fait**
**que** la roue d'entraînement (21) comprend un côté menant (21.1) et un côté mené (21.2), sachant qu'un moteur électrique (25) vient en prise avec ledit côté menant (21.1), et que ledit côté mené (21.2) est formé par le profil géométrique de guidage (22) provoquant un mouvement de l'élément de guidage (13) et de l'élément de blocage (10).

10. Dispositif selon l'une des revendications précédentes,
**caractérisé par le fait**
**que** l'entraînement (20) comporte un accouplement à roue libre, en particulier un mode avance et un mode inertie, l'élément de blocage (10) conservant sa position respective (1, 2, 3) lorsque ledit entraînement (20) est activé.

11. Dispositif selon l'une des revendications précédentes,
**caractérisé par le fait**
**qu'**au moins un élément de détection (60) est prévu pour détecter l'emplacement de l'élément de blocage (10) et/ou de la pièce structurelle (50) et/ou de la roue d'entraînement (21) et/ou de l'élément de montage (12).

12. Dispositif selon l'une des revendications précédentes,
**caractérisé par le fait**
**que** le profil géométrique de guidage (22) est muni d'une configuration de sûreté (26) qui agit sur le premier bras (14) de l'élément de blocage (10) lorsque ledit élément de blocage (10) est extrait de la position de verrouillage (1), ce qui a pour effet de soulager l'élément de guidage (13).

13. Dispositif selon la revendication 12,
**caractérisé par le fait**
**que** la configuration de sûreté (26) dépasse de la roue d'entraînement (21), à la manière d'une protubérance, et fait notamment partie intégrante d'un plateau.

14. Dispositif selon la revendication 12 ou 13,
**caractérisé par le fait**
**que** la configuration de sûreté (26) est réalisée, au moins partiellement, en forme d'arc de cercle et/ou de spirale.

15. Dispositif selon l'une des revendications précédentes,
**caractérisé par le fait**
**que** la configuration de sûreté (26) s'étend au voisinage de la piste (23), ladite configuration de sûreté (26) étant assignée au second segment (23.2) de ladite piste (23).
